# EUROPÄISCHE PATENTSCHRIFT

(11) **EP 3 708 296 B1**
(45) Veröffentlichungstag und Bekanntmachung des Hinweises auf die Patenterteilung: **21.08.2024**
(21) Anmeldenummer: 19162824.7
(22) Anmeldetag: 14.03.2019
(51) Int. Cl.: B23Q 7/10, B23Q 3/155, B25H 3/00, B25J 9/00, B25H 3/04

(54) **WERKSTÜCKSPEICHER UND WERKSTÜCKHANDHABUNGSSYSTEM MIT EINEM SOLCHEN WERKSTÜCKSPEICHER**
WORKPIECE HOLDER AND WORKPIECE HANDLING SYSTEM WITH SUCH A WORKPIECE HOLDER
MAGASIN DE PIÈCES ET SYSTÈME DE MANIPULATION DES PIÈCES DOTÉ D'UN TEL MAGASIN DE PIÈCES

(43) Veröffentlichungstag der Anmeldung: 16.09.2020
(73) Patentinhaber: Flender GmbH, 46395 Bocholt (DE)
(72) Erfinder: Demming, Martin, 46397 Bocholt (DE); Liemann, Norbert, 46399 Bocholt (DE)
(74) Vertreter: Michalski Hüttermann & Partner Patentanwälte mbB

(56) Entgegenhaltungen:
- EP-A1- 0 098 573
- EP-A1- 1 905 538
- EP-A1- 2 314 414
- EP-A2- 0 267 533
- CN-A- 102 581 081
- US-B1- 9 289 062

## Beschreibung

Wellenartig ausgebildete Werkstücke, beispielsweise in Form von Kegelradwellen oder dergleichen, werden vielfach horizontal in Werkstückspeichern der eingangs genannten Art gelagert. Um die Werkstücke dem Werkstückspeicher unter Einsatz eines mehrachsigen Roboterarms automatisch zuführen und entnehmen zu können, muss der Werkstückspeicher radial sowie axial genau definierte Speicherpositionen für die jeweiligen Werkstücke bereitstellen. Sind diese Positionen ungenau, kann es zu einer Fehlablage oder zu einer Fehlentnahme der Werkstücke kommen, wodurch der automatisierte Fertigungsablauf gestört werden kann. Die radiale Positionierung der Bauteile wird häufig über prismenartig ausgebildete Werkstückhalter erzielt. Die axiale Ausrichtung der Werkstücke erfolgt jeweils über einen an einem der einem Werkstück zugeordneten Werkstückhalter definierten Anschlag, der mit dem wenigstens einen sich in Umfangsrichtung erstreckenden Vorsprung des Werkstücks zusammenwirkt. Beim manuellen Bestücken des Werkstückspeichers kann die axiale Positionierung der auf die zugeordneten Werkstückhalter aufgelegten Werkstücke erfolgen, indem das Werkstück manuell in Richtung seiner Längsachse bewegt wird, bis der Vorsprung des Werkstücks an dem an einem der Werkstückhalter ausgebildeten Anschlag anschlägt. Diese manuelle axiale Ausrichtung erfordert jedoch eine hohe Gewissenhaftigkeit der ausrichtenden Person, was nicht immer gewährleistet werden kann. Alternativ ist es auch möglich, den Werkstückspeicher mit motorisch angetriebenen Schiebern zu versehen, welche die auf die Werkstückhalter aufgelegten Werkstücke automatisch in die gewünschte Position bewegen. Derartige Schieber sind allerdings sehr kostenintensiv, weshalb sie sich nur für solche Werkstückspeicher eignen, die in der Großserienfertigung eingesetzt werden.

Aus der EP 1 905 538 A1 ist ein Werkstückhalter bekannt, der eine an Durchmesser der Werkstücke anpassbare Lagerung ermöglicht bei senkrechter Ausrichtung der Werkstücklängsachsen.

Aus der EP 2 314 414 A1 ist eine vorab konfigurierbare Werkstücklagerung bekannt, die an verschiedene Durchmesser der Werkstücke anpassbar ist.

Aus der CN 102 581 081 A ist ein Werkstückspeicher bekannt, der die Merkmale des Oberbergriffs des Anspruchs 1 umfasst.

Ausgehend von diesem Stand der Technik ist es eine Aufgabe der vorliegenden Erfindung, einen Werkstückspeicher der eingangs genannten Art mit alternativem Aufbau zu schaffen, bei dem die radiale sowie die axiale Positionierung der am Werkstückspeicher angeordneten Werkstücke verlässlich und preiswert erfolgt.

Zur Lösung dieser Aufgabe schafft die vorliegende Erfindung einen Werkstückspeicher gemäß dem unabhängigen Anspruch 1.

Dank dieser erfindungsgemäßen Ausgestaltung der Werkstückhalter erfolgt die Ausrichtung der am Werkstückspeicher aufgenommenen Werkstücke automatisch unter Ausnutzung des Eigengewichts der Werkstücke, so dass auf zusätzliche Positionierungsmittel wie Schieber oder dergleichen verzichtet werden kann. Entsprechend zeichnet sich der erfindungsgemäße Werkstückspeicher durch seinen einfachen und vor allem preiswerten Aufbau aus, weshalb er auch für die Kleinserienfertigung geeignet ist.

Erfindungsgemäß liegt die Neigung in einem Bereich von 5 bis 45°, wodurch eine ordnungsgemäße axiale Selbstausrichtung der an den Werkstückhaltern aufgenommenen Werkstücke gewährleistet ist. Besonders vorteilhaft liegt die Neigung in einem Bereich von 10 bis 30°, was insbesondere die manuelle Bestückung des Werkstückspeichers mit Werkstücken vereinfacht. Bevorzugt ist zumindest ein von der Grundplatte vorstehender Bereich der Werkstückhalter aus Blech hergestellt, insbesondere aus einem Blech mit einer Stärke zwischen 4 und 12 mm. Entsprechend lassen sich die Werkstückhalter einfach und preiswert fertigen.

Gemäß einer Ausgestaltung der vorliegenden Erfindung sind die Werkstückhalter an ihrer Oberseite mit einer nach oben offenen Aussparung versehen, die insbesondere einander gegenüberliegende, V-artig zueinander ausgerichtete Seitenwände aufweist. Mit derartigen Aussparungen lässt sich eine einfache radiale Ausrichtung der Werkstücke realisieren. Darüber hinaus können auch Werkstücke mit unterschiedlichsten Durchmessern von denselben Werkstückhaltern aufgenommen werden, was den Werkstückspeicher flexibel einsetzbar macht.

Die Seitenwände der Aussparungen, welche im einfachsten Fall selbst die Werkstückauflageflächen definieren, können erfindungsgemäß mit einer Beschichtung versehen sein, die eine geringere Gleitreibung als dasjenige Material aufweist, aus dem die Seitenwände hergestellt sind. Die Beschichtung bildet in diesem Fall dann die Werkstückaufnahmeflächen. Dank einer solchen Beschichtung, die beispielsweise aus Kunststoff hergestellt sein kann, wird die Verlässlichkeit der axialen Positionierung der Werkstücke noch weiter verbessert. Darüber hinaus können solche Beschichtungen auch verhindern, dass ein Werkstück beim Aufsetzen auf die Werkstückhalter beschädigt wird.

Erfindungsgemäß umfassen die Werkstückhalter einen sich ausgehend von der Grundplatte senkrecht aufwärts erstreckenden ersten Abschnitt und zur Erzeugung der Neigung zumindest einen sich an den ersten Abschnitt anschließenden, einen Winkel zu diesem aufweisenden zweiten Abschnitt.

Bevorzugt sind die Werkstückhalter in einer regelmäßigen Matrix an der Grundplatte befestigt, was die Programmierung eines Roboterarms eines Werkstückhandhabungssystems erleichtert.

Ferner schafft die vorliegende Erfindung zur Lösung der eingangs genannten Aufgabe ein Werkstückhandhabungssystem mit zumindest einem erfindungsgemäßen Werkstückspeicher, der an definierter Position fixierbar ist, und einem Roboterarm zum Handhaben der an dem Werkstückspeicher aufgenommenen Werkstücke.

Weitere Merkmale und Vorteile der vorliegenden Erfindung werden anhand der nachfolgenden Beschreibung eines Werkstückspeichers gemäß einer Ausführungsform der vorliegenden Erfindung sowie eines Werkstückhandhabungssystems mit einem solchen Werkstückspeicher unter Bezugnahme auf die Zeichnung deutlich. Darin ist
- FIG 1: eine Seitenansicht eines Werkstückspeichers gemäß einer Ausführungsform der vorliegenden Erfindung, in dem Werkstücke aufgenommen sind;
- FIG 2: eine Schnittansicht entlang der Linie II-II in FIG 2, wobei der Einfachheit halber nur ein einzelner vorderer Werkstückhalter ohne darin aufgenommenes Werkstück gezeigt ist;
- FIG 3: eine Schnittansicht entlang der Linie III-III in FIG 1, die einen weiteren einzelnen hinteren Werkstückhalter ohne darin aufgenommenes Werkstück zeigt;
- FIG 4: eine Draufsicht des in FIG 1 dargestellten Werkstückspeichers ohne darin aufgenommene Werkstücke und
- FIG 5: eine schematische Vorderansicht eines Werkstückhandhabungssystems mit dem in FIG 1 dargestellten Werkstückspeicher.

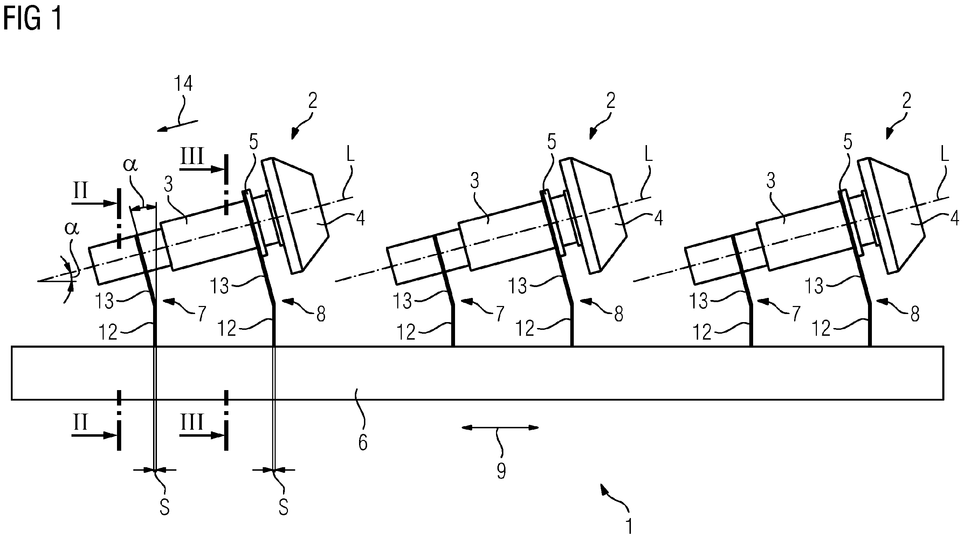

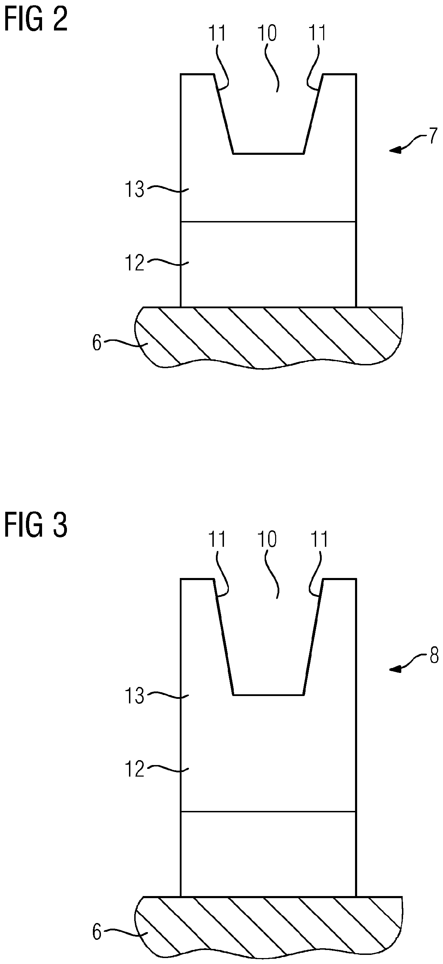

Die Figuren 1 bis 4 zeigen einen Werkstückspeicher 1 gemäß einer Ausführungsform der vorliegenden Erfindung. Der Werkstückspeicher 1 dient dazu, wellenartig ausgebildete, bezogen auf ihre Längsachse L zumindest im Wesentlichen rotationssymmetrische Werkstücke 2 aufzunehmen. Bei den Werkstücken 2 handelt es sich vorliegend um einteilig ausgebildete Kegelradwellen mit einem Wellenabschnitt 3 und einem Kegelradabschnitt 4. Der Wellenabschnitt 3 umfasst vorliegend Bereiche unterschiedlichen Durchmessers. Ferner ist am Wellenabschnitt 3 ein sich in Umfangsrichtung erstreckender Vorsprung 5 ausgebildet, der gegenüber den axial unmittelbar benachbart angeordneten Bereichen des Wellenabschnitts 3 radial auswärts vorsteht.

Der Werkstückspeicher umfasst eine Grundplatte 6, die vorliegend aus Metall hergestellt ist. An der Grundplatte 6 ist eine Vielzahl von Werkstückhaltern 7, 8 befestigt, die aufwärts von der Grundplatte 6 vorstehen, wobei jeweils ein Werkstückhalter 7 und ein Werkstückhalter 8 einem aufzunehmenden Werkstück 2 zugeordnet sind. Die Werkstückhalter 7, 8 sind vorliegend jeweils aus einem metallischen Blech hergestellt, dessen Stärke S bevorzugt im Bereich zwischen 4 und 12 mm liegt, um den Werkstückhaltern 7, 8 eine ausreichende Stabilität und Formfestigkeit zu verleihen. Die Befestigung der Werkstückhalter 7 und 8 an der Grundplatte 6 ist im vorliegenden Fall stoffschlüssig unter Verwendung eines Schweiß- oder Lötverfahrens erfolgt. Ebenso können die Werkstückhalter 7 und 8 aber auch mit der Grundplatte 6 verschraubt werden. Alternativ ist es ferner möglich, in der Grundplatte 6 sich parallel zueinander erstreckende Führungen auszubilden, in denen die Werkstückhalter 7 und 8 in Richtung des Pfeils 9 verschiebbar und an bevorzugt beliebigen Positionen arretierbar sind. Solche Führungen sind dahingehend von Vorteil, dass die Abstände zwischen den Werkstückhaltern 7, 8 variabel sind und entsprechend an Werkstücke 2 unterschiedlicher Länge angepasst werden können. Auch können die Werkstückhalter 7, 8 bedarfsgerecht durch andere Werkstückhalter mit abweichender Größe und/oder Form ausgetauscht werden, um den Werkstückspeicher 1 an unterschiedliche Werkstücke anpassen zu können.

Die jeweils ein Werkstück 2 aufnehmenden Werkstückhalter 7 und 8 sind derart ausgebildet, zueinander beabstandet und zueinander ausgerichtet, dass die Längsachse L eines auf diese von oben aufgelegten Werkstücks 2 zur Horizontalen derart geneigt ist, dass sich das Werkstück 2 schwerkraftbedingt der Neigung folgend bewegt, bis sein Vorsprung 5 an der Außenseite des Werkstückhalters 8 zur Anlage kommt. Vorliegend beträgt die Neigung α etwa 15°, wobei sie in einem Bereich von 5 bis 45° liegt, insbesondere in einem Bereich von 10 bis 30°. Die Werkstückhalter 7 und 8 weisen grundsätzlich den gleichen Aufbau auf. Beide Werkstückhalter 7 und 8 weisen eine rechteckige Grundform auf und sind an ihrer Oberseite mit einer nach oben offenen Aussparung 10 versehen, die einander gegenüberliegende, V-artig zueinander ausgerichtete Seitenwände 11 aufweist, welche die Aufnahmeflächen für das Werkstück 2 definieren. Die Größe der Aussparungen 10 und die Neigung der V-Form der Seitenwände 11 sind dabei jeweils auf den aufzunehmenden Werkstückdurchmesser abgestimmt. Die Seitenwände 11 können mit einer Beschichtung versehen sein, die eine geringere Gleitreibung als dasjenige Material aufweist, aus dem die Seitenwände 11 bzw. die Werkstückhalter 7, 8 hergestellt sind, um auf diese Weise die Reibung zwischen den Werkstückhaltern 7, 8 und dem Werkstück 2 zu verringern. Vorliegend ist dies jedoch nicht der Fall. Die Werkstückhalter 7 und 8 umfassen jeweils einen sich ausgehend von der Grundplatte 6 senkrecht aufwärts erstreckenden ersten Abschnitt 12 und zur Erzeugung der Neigung der Längsachse L eines auf diese von oben aufgelegten Werkstücks 2 zur Horizontalen einen sich an den ersten Abschnitt 12 anschließenden, einen Winkel α zu diesem aufweisenden zweiten Abschnitt 13. Ferner ist der Werkstückhalter 8 etwas länger als der Werkstückhalter 7 ausgeführt, so dass sich die zweiten Abschnitte 13 beider Werkstückhalter 7 und 8 im Wesentlichen senkrecht zur Längsachse L des Werkstücks 2 erstrecken.

Wird nun ein Werkstück 2 von oben auf benachbart angeordnete Werkstückhalter 7 und 8 aufgesetzt, so wird dieses durch die V-förmigen Seitenwände 11 der Werkstückhalter 7 und 8 radial ausgerichtet. Ferner bewegt sich das Werkstück 2 nach dem Auflegen auf die Werkstückhalter 7 und 8 schwerkraftbedingt in Richtung des Pfeils 14, bis der Vorsprung 5 an dem Werkstückhalter 8 zur Anlage kommt. Sobald dies der Fall ist, ist das Werkstück 2 an den Werkstückhaltern 7 und 8 auch axial positioniert. Auf diese Weise erhält jedes Werkstück 2 eine definierte Positionierung am Werkstückspeicher 1.

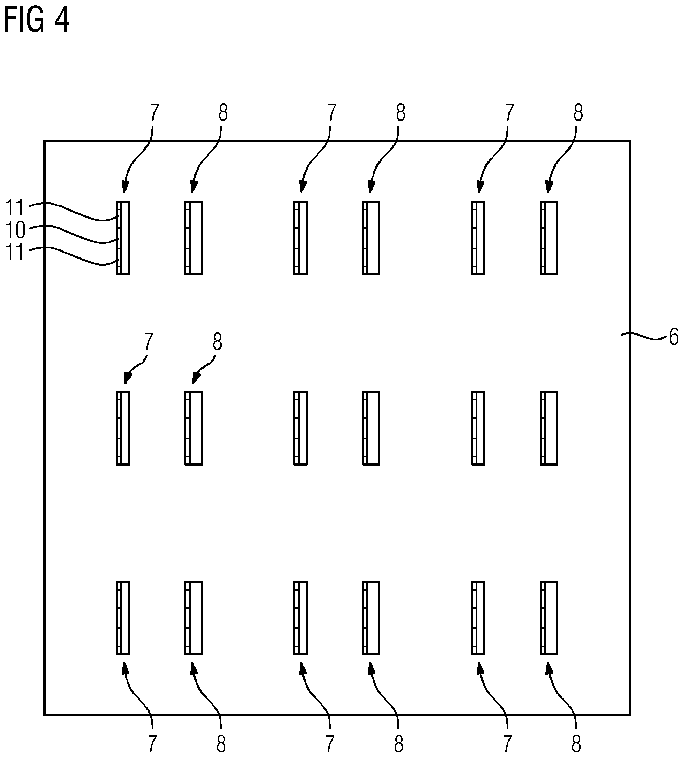

Wie es in der Draufsicht gemäß FIG 4 zu erkennen ist, sind die Werkstückhalter 7, 8 in einer regelmäßigen Matrix an der Grundplatte 6 befestigt. Entsprechend einfach ist es, die Positionierung der einzelnen am Werkstückspeicher 1 angeordneten Werkstücke 2 in ein Computerprogramm eines Werkstückhandhabungssystems zu übernehmen.

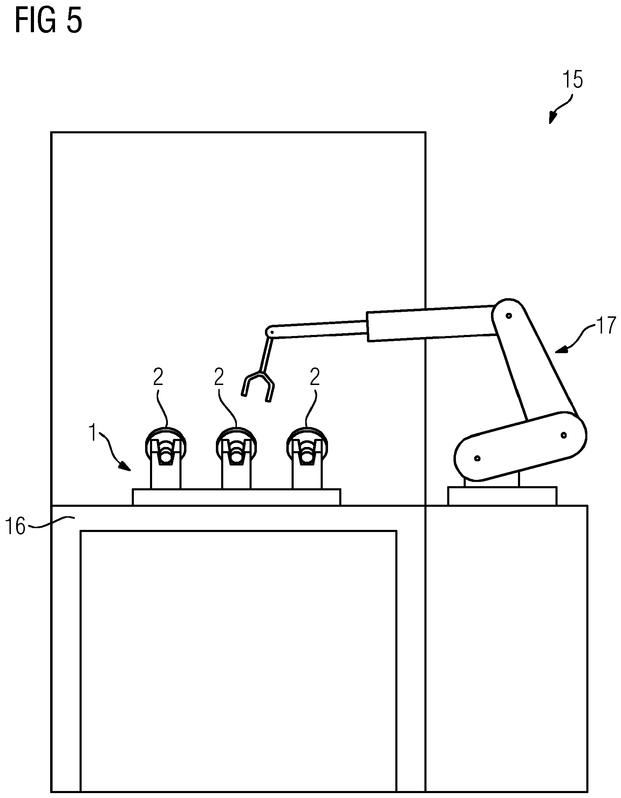

Ein Beispiel eines Werkstückhandhabungssystems 15 ist in FIG 5 dargestellt. Das Werkstückhandhabungssystem 15 umfasst vorliegend einen Tisch 16, auf dem der zuvor beschriebene Werkstückspeicher 1 an definierter Position fixierbar ist. Die Positionierung des Werkstückspeichers 1 auf dem Tisch 16 kann beispielsweise unter Verwendung entsprechender Anschläge oder dergleichen erfolgen. Die Fixierung des Werkstückspeichers 1 wird bevorzugt klemmend realisiert. Das Werkstückhandhabungssystem 15 umfasst einen Roboterarm, der zum Handhaben der an dem Werkstückspeicher 1 aufgenommenen Werkstücke 2 ausgelegt ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. Werkstückspeicher (1) für längliche, wellenartig ausgebildete, bezogen auf ihre Längsachse zumindest im Wesentlichen rotationssymmetrische Werkstücke (2), die entlang ihrer Längsachse (L) wenigstens einen sich in Umfangsrichtung erstreckenden Vorsprung (5) aufweisen, der gegenüber einem axial unmittelbar benachbart angeordneten Werkstückbereich radial auswärts vorsteht, umfassend eine Grundplatte (6) und eine Vielzahl von an der Grundplatte (6) befestigten, aufwärts von dieser vorstehenden Werkstückhaltern (7, 8), die Werkstückaufnahmeflächen definieren, wobei jeweils zumindest zwei Werkstückhalter (7, 8) einem aufzunehmenden Werkstück (2) zugeordnet sind, wobei die einem aufzunehmenden Werkstück (2) zugeordneten Werkstückhalter (7, 8) derart ausgebildet, zueinander beabstandet und zueinander ausgerichtet sind, dass die Längsachse (L) eines auf diese von oben aufgelegten Werkstücks (2) zur Horizontalen derart geneigt ist, dass sich das Werkstück (2) schwerkraftbedingt der Neigung (α) folgend bewegt, bis sein Vorsprung (5) an einem der Werkstückhalter (8) zur Anlage kommt, und wobei die Neigung (α) in einem Bereich von 5 bis 45° liegt, **dadurch gekennzeichnet, dass** die Werkstückhalter (7, 8) einen sich ausgehend von der Grundplatte (6) senkrecht aufwärts erstreckenden ersten Abschnitt (12) und zur Erzeugung der Neigung (α) zumindest einen sich an den ersten Abschnitt (12) anschließenden, die Neigung (α) zu diesem aufweisenden zweiten Abschnitt (13) umfassen, und dass der Werkstückhalter (8) etwas länger als der Werkstückhalter (7) ausgeführt ist, so dass sich die zweiten Abschnitte (13) beider Werkstückhalter (7, 8) im Wesentlichen senkrecht zur Längsachse (L) des Werkstücks (2) erstrecken.

2. Werkstückspeicher (1) nach Anspruch 1, **dadurch gekennzeichnet, dass** die Neigung (α) in einem Bereich von 10 bis 30° liegt.

3. Werkstückspeicher (1) nach Anspruch 1 oder 2, **dadurch gekennzeichnet, dass** zumindest ein von der Grundplatte (6) vorstehender Bereich der Werkstückhalter (7, 8) aus Blech hergestellt ist, insbesondere aus einem Blech mit einer Stärke zwischen 4 und 12 mm.

4. Werkstückspeicher (1) nach einem der vorhergehenden Ansprüche, **dadurch gekennzeichnet, dass** die Werkstückhalter (7, 8) an ihrer Oberseite mit einer nach oben offenen Aussparung (10) versehen sind, die insbesondere einander gegenüberliegende, V-artig zueinander ausgerichtete Seitenwände (11) aufweist.

5. Werkstückspeicher (1) nach Anspruch 4, **dadurch gekennzeichnet, dass** die Seitenwände (11) der Aussparungen (10) mit einer die Werkstückaufnahmeflächen bildenden Beschichtung versehen sind, die eine geringere Gleitreibung als dasjenige Material aufweist, aus dem die Seitenwände (11) hergestellt sind.

6. Werkstückspeicher (1) nach einem der vorhergehenden Ansprüche, **dadurch gekennzeichnet, dass** die Werkstückhalter (7, 8) in einer regelmäßigen Matrix an der Grundplatte (6) befestigt sind.

7. Werkstückhandhabungssystem (15) mit zumindest einem Werkstückspeicher (1) nach einem der vorhergehenden Ansprüche, der an definierter Position fixierbar ist, und einem Roboterarm (17) zum Handhaben der an dem Werkstückspeicher (1) aufgenommenen Werkstücke (2).

## Claims

1. Workpiece storage means (1) for elongate workpieces (2) of shaft-like form which are at least substantially rotationally symmetrical relative to their longitudinal axis and which have along their longitudinal axis (L) at least one projection (5) extending in the peripheral direction, which projection protrudes radially outwards relative to a workpiece region arranged immediately axially adjacent thereto, comprising a base plate (6) and a plurality of workpiece holders (7, 8) which are fastened to the base plate (6) and protrude upwards therefrom and which define workpiece receiving surfaces, wherein in each case at least two workpiece holders (7, 8) are associated with a workpiece (2) to be received, wherein the workpiece holders (7, 8) associated with a workpiece (2) to be received are so configured, spaced apart from one another and oriented relative to one another, that the longitudinal axis (L) of a workpiece (2) placed thereon from above slopes relative to the horizontal in such a manner that the workpiece (2) moves under the force of gravity, following the slope (α), until its projection (5) comes into contact with one of the workpiece holders (8), and wherein the slope (α) lies in a range from 5 to 45°, **characterized in that** the workpiece holders (7, 8) comprise a first portion (12) extending perpendicularly upwards starting from the base plate (6) and, for producing the slope (α), at least one second portion (13) which adjoins the first portion (12) and has the slope (α) relative thereto, and **in that** the workpiece holder (8) is designed to be slightly longer than the workpiece holder (7) such that the second portions (13) of the two workpiece holders (7, 8) extend substantially perpendicularly to the longitudinal axis (L) of the workpiece (2).

2. Workpiece storage means (1) according to Claim 1, **characterized in that** the slope (α) lies in a range from 10 to 30°.

3. Workpiece storage means (1) according to Claim 1 or 2, **characterized in that** at least one region, protruding from the base plate (6), of the workpiece holders (7, 8) is produced from sheet metal, in particular from sheet metal having a thickness between 4 and 12 mm.

4. Workpiece storage means (1) according to one of the preceding claims, **characterized in that** the workpiece holders (7, 8) are provided on their upper side with an opening (10) which is open to the top and which in particular has mutually opposite side walls (11) which are oriented in a V-shape relative to one another.

5. Workpiece storage means (1) according to Claim 4, **characterized in that** the side walls (11) of the openings (10) are provided with a coating forming the workpiece receiving surfaces, which coating has a lower sliding friction than the material from which the side walls (11) are produced.

6. Workpiece storage means (1) according to one of the preceding claims, **characterized in that** the workpiece holders (7, 8) are fastened to the base plate (6) in a regular matrix.

7. Workpiece handling system (15) having at least one workpiece storage means (1) according to one of the preceding claims, which can be fixed in a defined position, and a robotic arm (17) for handling the workpieces (2) received on the workpiece storage means (1) .

## Revendications

1. Magasin de pièces (1) pour pièces (2) allongées, réalisées en forme d'arbres, au moins sensiblement à symétrie de révolution par rapport à leur axe longitudinal, lesquelles pièces présentent, le long de leur axe longitudinal (L), au moins une saillie (5) s'étendant dans la direction périphérique, laquelle saillie fait saillie radialement vers l'extérieur par rapport à une région de pièce disposée de manière immédiatement adjacente axialement, comprenant une plaque de base (6) et une pluralité de supports de pièce (7, 8) fixés à la plaque de base (6), faisant saillie vers l'extérieur à partir de celle-ci, lesquels supports définissent des surfaces de réception de pièce, respectivement au moins deux supports de pièce (7, 8) étant associés à une pièce (2) devant être reçue, les supports de pièce (7, 8) associés à une pièce (2) devant être reçue étant réalisés, espacés les uns des autres et orientés les uns par rapport aux autres de telle sorte que l'axe longitudinal (L) d'une pièce (2) placée sur celui-ci par le haut soit incliné par rapport à l'horizontale de telle sorte que la pièce (2) se déplace sous l'effet de la force de gravité en suivant l'inclinaison (α) jusqu'à ce que sa saillie (5) vienne en appui contre l'un des supports de pièce (8), et l'inclinaison (α) se situant dans une plage de 5 à 45°, **caractérisé en ce que** les supports de pièce (7, 8) comprennent une première partie (12) s'étendant perpendiculairement vers le haut à partir de la plaque de base (6) et, pour la production de l'inclinaison (α), au moins une deuxième partie (13) se raccordant à la première partie (12), présentant l'inclinaison (α) par rapport à celle-ci, et **en ce que** le support de pièce (8) est configuré de manière à être un peu plus long que le support de pièce (7), de sorte que les deuxièmes parties (13) des deux supports de pièce (7, 8) s'étendent sensiblement perpendiculairement à l'axe longitudinal (L) de la pièce (2).

2. Magasin de pièces (1) selon la revendication 1, **caractérisé en ce que** l'inclinaison (α) se situe dans une plage de 10 à 30°.

3. Magasin de pièces (1) selon la revendication 1 ou 2, **caractérisé en ce qu'**au moins une région, faisant saillie à partir de la plaque de base (6), des supports de pièce (7, 8) est fabriquée à partir d'une tôle, en particulier à partir d'une tôle ayant une épaisseur entre 4 et 12 mm.

4. Magasin de pièces (1) selon l'une des revendications précédentes, **caractérisé en ce que** les supports de pièce (7, 8) sont dotés, sur leur côté supérieur, d'un évidement (10) ouvert vers le haut, lequel présente des parois latérales (11) en particulier en regard l'une de l'autre, orientées en forme de V l'une par rapport à l'autre.

5. Magasin de pièces (1) selon la revendication 4, **caractérisé en ce que** les parois latérales (11) des évidements (10) sont dotées d'un revêtement formant les surfaces de réception de pièce, lequel revêtement présente une friction de glissement inférieure au matériau à partir duquel les parois latérales (11) sont fabriquées.

6. Magasin de pièces (1) selon l'une des revendications précédentes, **caractérisé en ce que** les supports de pièce (7, 8) sont fixés à la plaque de base (6) dans une matrice régulière.

7. Système de manipulation de pièces (15) comportant au moins un magasin de pièces (1) selon l'une des revendications précédentes, lequel peut être fixé à une position définie, et un bras de robot (17) servant à la manipulation des pièces (2) reçues sur le magasin de pièces (1).
